# EUROPÄISCHE PATENTSCHRIFT

(11) **EP 0 396 933 B1**
(45) Veröffentlichungstag und Bekanntmachung des Hinweises auf die Patenterteilung: **06.07.1994**
(21) Anmeldenummer: 90107100.1
(22) Anmeldetag: 12.04.1990
(51) Int. Cl.: B62D 25/18, B62D 25/16

(54) **Radlaufschale**
Wheel-housing shell
Coquille de garde-boue

(30) Priorität: 10.05.1989 IE 152989
(43) Veröffentlichungstag der Anmeldung: 14.11.1990
(73) Patentinhaber: H.P. Chemie Pelzer Research & Development Ltd., Tramore, County Waterford (IE)
(72) Erfinder: Casey, John, Tramore, County Waterford (IE)
(74) Vertreter: Jönsson, Hans-Peter, Dr.Dipl.-Chem.

(56) Entgegenhaltungen:
- DE-A- 3 637 453
- GB-A- 2 014 525
- US-A- 3 834 732
- US-A- 4 205 861
- US-A- 4 722 541

## Beschreibung

Gegenstand der Erfindung ist eine Radlaufschale zum Einbau in Kotflügel eines Kraftfahrzeuges, die über einen erheblichen Teil des inneren Umfangs des Kotflügels mindestens annähernd parallel zu dem Kotflügel verläuft und mit diesem einen oder mehrere, schlauchartige Kanäle bildet, die an ihren in Fahrtrichtung vorderen Enden einen Lufteinlaß und an ihren anderen Enden einen gegen die Fahrbahn gerichteten Luftauslaß aufweist, wobei die Radlaufschale mit Öffnungen versehen ist, die den Durchtritt von Spritzwasser in den Kanal begünstigen und erleichtern.

Bei Radlaufschalen der vorstehend beschriebenen Art bildet sich während der Fahrt eine Luftströmung von deren vorderem zum hinteren Ende aus. Zugleich damit entsteht ein Unterdruck in dem Kanal, der durch die Öffnungen in der Radlaufschale das anfallende Spritzwasser in den Kanal hineinzieht und mit der Luftströmung gegen die Fahrbahn ableitet. Damit wird ein seitlicher Austritt des Spritzwassers aus dem Kotflügel und somit auch die Verschmutzung und/oder Behinderung des eigenen Fahrzeuges oder anderer Verkehrsteilnehmer vermieden.

Eine Radlaufschale der eingangs beschriebenen Art ist in der DE 29 34 145 A1 beschrieben. Bei dieser Ausführungsform wird die Erzeugung des Unterdrucks in dem Raum zwischen Kotflügel und Radlaufschale dadurch bewirkt, daß die Radlaufschale in einigem Abstand bis unter den Fahrzeugboden geführt wird. Dabei erzeugt die Luftströmung zwischen Fahrbahn und Fahrzeugboden in dem Kanal zwischen Kotflügel und Radlaufschale einen Unterdruck so daß dieser Raum trocken und sauber bleibt und so einer Korrosion des Kotflügels entgegen gewirkt wird.

In einer anderen Ausführungsform nach DE 25 24 344 A1 ist der Kanal gegen das Rad hin offen und in der Öffnung mit zahlreichen Pralleisten versehen, die das von dem Rad abfliegende Spritzwasser in den Kanal ziehen von wo aus es auf die Fahrbahn geleitet wird.

Die vorstehenden Ausführungsformen haben den Nachteil, daß ihre Wirkung beschränkt ist, sei es, daß sie wie bei der DE 29 34 145 vorwiegend der Korrosion des Kotflügels entgegenwirken sollen, sei es, daß wie bei der DE 25 24 344 A1 ein erheblicher Teil des Spritzwassers von der Radlaufschale abprallt oder aus anderen Gründen nicht von dem zwischen den Pralleisten anstehenden Sog erfaßt wird, zum Beispiel weil der Unterdruck in dem Kanal wegen vorübergehender Geschwindigkeitsverminderung zu niedrig ist.

Ein weiterer Nachteil ist darin zu sehen, daß es durch die Luftströmung und den Aufprall des Wassers zu einer störenden Geräuschbelästigung kommt.

Der Erfindung liegt die Aufgabe zugrunde, eine Radlaufschale anzugeben, bei der ein größerer Anteil des Spritzwassers erfaßt wird und des weiteren eine Minderung der Geräuschbelästigung eintritt.

Die Lösung der gestellten Aufgabe erfolgt erfindungsgemäß dadurch, daß die Radlaufschale an ihrer dem Rad zugewandten Seite und über ihre ganze, parallel zum Kotflügel verlaufenden Fläche mit einer Filtermatte belegt ist und aus gewelltem Material besteht, desssen Wellung parallel zum Kotflügel verläuft und an dessen dem Rad zugewandten Wellenbergen die Filtermatte anliegt, sodaß getrennte Luft - und Wasserführungskanäle gebildet werden.

Der besondere Vorteil der erfindungsgemäßen Lösung ist darin zu sehen, daß der abprallende Anteil des Spritzwassers drastisch vermindert wird, weil es durch die Porosität der Filtermatte aufgesogen wird sowie auch der Teil des Spritzwassers der keiner ausreichenden Sogwirkung unterliegt. Da die Filtermatte wegen der Luftströmung von der Seite des Kanals her ständig nachtrocknet, zieht sich das aufgenommene Wasser durch die Porosität in diesen Bereich der Filtermatte. Die Filtermatte dient also in gewissem Sinne als Zwischenspeicher für das Wasser. Zugleich erfolgt eine Dämpfung für die auftretenden Luftströmungsgeräusche. Endlich wird auch die akustische Wirkung von Steinschlägen und Wassergeräuschen abgedämpft.

Mit besonderem Vorteil besteht die Radlaufschale aus gewelltem Material dessen Wellung parallel zum Kotflügel verläuft und an dessen dem Rad zugewandten Wellenbergen die Filtermatte anliegt. Dabei wirken die dem Rad zugewandten Wellentäler als Kanäle für das Spritzwasser. Wenn man die der Innenwand des Kotflügels zugewandten Wellentäler nicht ausfüllt, kann auch hier ein Kanal entstehen, der die Kotflügelinnenwand durch den Luftstrom trocken hält, im Sinne der Ausführung nach der DE 29 34 145 A1. Zudem ergibt die Wellenform ein biege- und verwindungssteifes Gebilde.

In einer anderen Ausführungsform ist die Radlaufschale U-förmig und quer zum Radlauf so ausgebildet, daß sie zur Filtermatte hin aus einer Lochplatte oder einem Gitternetz, zum Beispiel aus Kunststoff, besteht und deren senkrecht zur Radachse verlaufende Seiten, die nicht von der Filtermatte bedeckt sind mit Durchbrüchen versehen sind. Diese Ausführungsform ist besonders leicht herzustellen.

Um eine ausreichende Sogwirkung in dem Kanal zu erzeugen, ist es von Vorteil, wenn die Radlaufschale senkrecht zur Radachse verlaufende Seiten hat, die mit, von der Filtermatte nicht bedeckten Durchbrüchen versehen sind.

Die Filtermatte selbst ist mit Vorteil mehrschichtig mit Schichten unterschiedlicher Porosität und/oder Dichte ausgebildet. Dabei ist es vorteilhaft, die Schicht mit der größeren Porosität zum Rand hin anzuordnen weil dadurch die Wasseraufnahme erleichtert wird.

Als Material für die Filtermatte eignet sich besonders ein Vliesmaterial auf Kunststoffbasis. Dieses Material hat den Vorteil hoher Korrosionsfestigkeit, guter Verarbeitbarkeit, guter Geräuschdämpfung und Reinigungsfähigkeit.

Die Figuren zeigen in zum Teil schematischer Darstellung Ausführungsbeispiele von Radlaufschalen nach der Lehre der Erfindung.

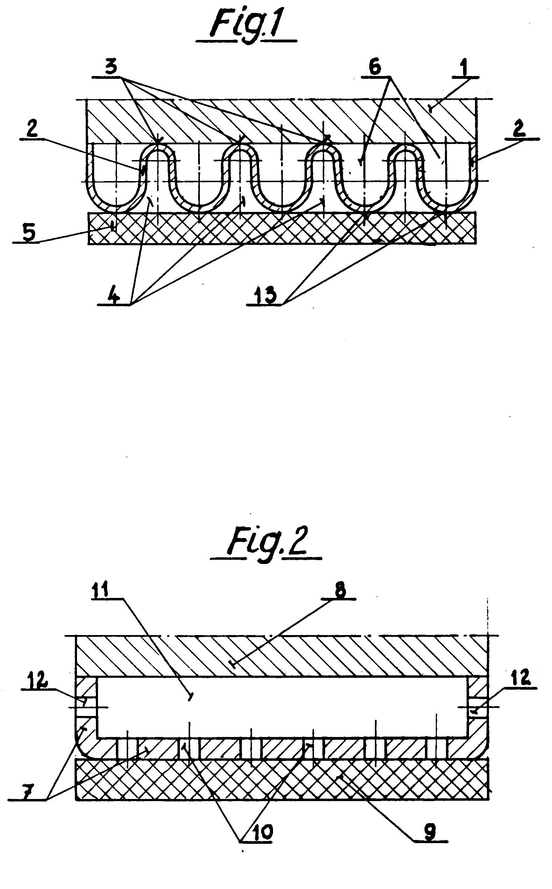

In Figur 1 ist die Innenseite des Kotflügels mit 1 bezeichnet, an der an den Punkten 3 die Radlaufschale 2 anliegt, die aus gewelltem Material besteht und an die an den Punkten 13 die Filtermatte 5 anliegt, die dem Rad zugewandt ist. Die Hohlräume 4 dienen als Kanäle, die das aus der Filtermatte 5 austretende Wasser aufnehmen, das von dem in den Kanälen 4 herschenden Unterdruck abgesogen und der Fahrbahn zugeleitet wird. Verzichtet man auf die Ausfüllung der Hohlräume 6, so können diese ebenfalls als Kanäle dienen, die die Innenseite des Kotflügels durch die Luftströmung trocken halten und so der Korrosion vorbeugen.

In Figur 2 hat die Radlaufschale 7 im wesentlichen U-förmiges Profil. Mit ihren Kanten liegt sie an der Innenseite des Kotflügels 8 an und ist ihrerseits gegen das Rad hin mit der Filtermatte 9 bedeckt. Die Bohrungen 10 am U-Boden der Radlaufschale 7 dienen dem Durhtritt des Wassers aus der Filtermatte 9 in den Kanal 11, währen die Bohrungen 12 in den U-Schenkeln der Erzeugung eines ausreichenden Unterdrucks dienen.

## Patentansprüche

1. Radlaufschale (2) zum Einbau in Kotflügel (1) eines Kraftfahrzeuges, die über einen erheblichen Teil des inneren Umfangs des Kotflügels (1) mindestens annähernd parallel zu dem Kotflügel (1) verläuft und mit diesem einen schlauchförmigen Kanal (4) bildet, der an seinem, in Fahrtrichtung vorderen Ende einen Lufteinlaß und an seinem anderen Ende einen gegen die Fahrbahn gerichteten Luftauslaß aufweist, wobei die Radlaufschale (2) mit Öffnungen versehen ist, die den Durchtritt von Spritzwasser in den Kanal (4) begünstigt und erleichtert,
dadurch gekennzeichnet,
daß die Radlaufschale (2) an ihrer dem Rad zugewandten Seite und über ihre ganze, parallel zum Kotflügel (1) verlaufenden Fläche mit einer Filtermatte (5) belegt ist und aus gewelltem Material besteht, desser Wellung parallel zum Kotflügel verläuft und an dessen dem Rad zugewandten Wellenbergen (13) die Filtermatte (5) anliegt, sodaß getrennte Luft- und Wasserführungskanäle gebildet werden.

2. Radlaufschale (7) zum Einbau in Kotflügel (8) eines Kraftfahrzeuges, die über einen erheblichen Teil des inneren Umfanges des Kotflügels (8) mindestens annähernd parallel zu dem Kotflügel (8) verläuft und mit diesem einen schlauchförmigen Kanal (11) bildet, der an seinem in Fahrtrichtung vorderen Ende einen Lufteinlaß und an seinem anderen Ende einen gegen die Fahrbahn gerichteter Luftauslaß aufweist, wobei die Radlaufschale (7) mit Öffnungen (10) versehen ist, die den Durchtritt von Spritzwasser in den Kanal (11) begünstigen und erleichtern,
dadurch gekennzeichnet,
daß die Radlaufschale (7) an ihrer dem Rad zugewandten Seite und über ihre ganze, parallel zum Kotflügel (8) verlaufrende Fläche mit einer Filtermatte (9) belegt ist, wobei die Radlaufschale (7) U-förmig quer zum Radlauf so ausgebildet ist, daß sie zur Filtermatte (9) hin aus einer Lochplatte oder einem Gitternetz besteht und derer senkrecht zur Radachse verlaufende Seiten, die nicht von der Filtermatte (9) bedeckt sind, mit Durchbrüchen (12) versehen sind.

3. Radlaufschale (2,7) nach Anspruch 1 oder 2,
dadurch gekennzeichnet,
daß die Filtermatte (5,9) mehrschichtig aus Schichten unterschiedlicher Porosität und/oder Dicke ausgebildet ist.

4. Radlaufschale (2,7) nach einem der vorhergehenden Ansprüche,
dadurch gekennzeichnet,
daß die Filtermatte (5,9) aus vliesartigem Material besteht.

## Claims

1. Wheel arch liner (2) for installation in wings (1) or mudguards of a motor vehicle, which extends over a considerable portion of the inner circumference of the wing (1) or mudguard, at least approximately parallel to the wing (1) or mudguard and forms with the latter a tubular duct (4) which has an air inlet at its forward end in the direction of travel and an air outlet directed towards the roadway at its other end, the wheel arch liner (2) being provided with openings which favour and facilitate the passage of sprayed water into the duct (4), characterized in that, on its side facing the wheel and over the entirety of its surface extending parallel to the wing (1) or mudguard, the wheel arch liner (2) is covered by a filter mat (5) and consists of corrugated material, the corrugation of which runs parallel to the wing or mudguard and against the wheel-facing peaks (13) of which the filter mat (5) rests, thereby forming separate air and water ducts.

2. Wheel arch liner (7) for installation in wings (8) or mudguards of a motor vehicle, which extends over a considerable portion of the inner circumference of the wing (8) or mudguard, at least approximately parallel to the wing (8) or mudguard and forms with the latter a tubular duct (11) which has an air inlet at its forward end in the direction of travel and an air outlet directed towards the roadway at its other end, the wheel arch liner (7) being provided with openings (10) which favour and facilitate the passage of sprayed water into the duct (11), characterized in that, on its side facing the wheel and over the entirety of its surface extending parallel to the wing (8) or mudguard, the wheel arch liner (7) is covered by a filter mat (9), the wheel arch liner (7) being constructed in a U-shape transversely to the wheel arch and in such a way that, towards the filter mat (9), it consists of a perforated plate or a grid and its sides extending perpendicular to the axis of the wheel, which are not covered by the filter mat (9), are provided with apertures (12).

3. Wheel arch liner (2, 7), according to Claim 1 or 2, characterized in that the filter mat (5, 9) is of multi-layered design and consists of layers of different porosity and/or thickness.

4. Wheel arch liner (2, 7) according to one of the preceding claims, characterized in that the filter mat (5, 9) consists of a material of nonwoven structure.

## Revendications

1. Coquille de garde-boue (2) pour le montage dans les ailes (1) d'un véhicule à moteur, qui se développe sur une partie importante de l'étendue interne de l'aile (1) au moins approximativement parallèlement à l'aile (1) et qui forme avec celle-ci un canal (4) en forme de tuyau, comportant à son extrémité avant dans le sens de la marche une entrée d'air et à son autre extrémité une sortie d'air dirigée vers la chaussée tandis que la coquille de garde-boue (2) est munie d'ouvertures, qui favorisent et facilitent le passage d'eau projetée dans le canal, caractérisée en ce que la coquille de garde-boue (2) est garnie d'une natte filtrante (5) sur sa face tournée vers la roue et sur toute sa surface s'étendant parallèlement à l'aile (1) se composant d'un matériau ondulé, dont l'ondulation se développe parallèlement à l'aile et dont les points hauts (13) tournés vers la roue assurent l'adhérence avec la natte (5), en formant ainsi des canaux séparés de guidage d'air et de guidage d'eau.

2. Coquille de garde-boue (7) pour montage dans des ailes (8) d'un véhicule à moteur, qui se développe sur une partie importante de l'étendue interne de l'aile (8) au moins approximativement parallèlement à l'aile (8) et forme avec celle-ci un canal (11) en forme de tuyau comportant à son extrémité avant dans le sens de la marche une entrée d'air et à son autre extrémité une sortie d'air dirigée vers la chaussée tandis que la coquille de garde-boue (7) est munie d'ouvertures (10), qui favorisent et facilitent le passage d'eau projetée dans le canal caractérisée en ce que la coquille de garde-boue (7) est garnie d'une natte filtrante (9) sur sa face tournée vers la roue et sur toute sa surface s'étendant parallèlement à l'aile (8), la coquille de garde-boue est réalisée en forme de U transversalement au mouvement de la roue, de sorte qu'elle se compose par rapport à la natte filtrante d'une plaque perforée ou d'un réseau quadrillé, ses côtés se développant perpendiculairement à l'axe de la roue, ne sont pas recouverts par la natte filtrante (9), et sont munis de passages (12).

3. Coquille de garde-boue (2, 7) selon les revendications 1 ou 2, caractérisée en ce que la natte filtrante (5, 9) est réalisée en plusieurs couches de porosité et/ou d'épaisseur différentes.

4. Coquille de garde-boue (2, 7) selon une des revendications précédentes, caractérisée en ce que la natte filtrante (5, 9) est constituée d'une matière du type toison.
